# FASCICULE DE BREVET EUROPEEN

(11) **EP 3 512 758 B1**
(45) Date de publication et mention de la délivrance du brevet: **29.12.2021**
(21) Numéro de dépôt: 17780473.9
(22) Date de dépôt: 13.09.2017
(51) Int. Cl.: G08G 1/16

(54) **METHODE D'AIDE A LA CONDUITE, PROCEDE D'IMPLEMENTATION D'UNE TELLE METHODE ET DISPOSITIF D'AIDE A LA CONDUITE**
VERFAHREN ZUR FAHRUNTERSTÜTZUNG, VERFAHREN ZUR IMPLEMENTIERUNG SOLCH EINES VERFAHRENS UND VORRICHTUNG ZUR FAHRUNTERSTÜTZUNG
METHOD FOR AIDING DRIVING, PROCESS FOR IMPLEMENTING SUCH A METHOD AND DEVICE FOR AIDING DRIVING

(30) Priorité: 15.09.2016 FR 1658651
(43) Date de publication de la demande: 24.07.2019
(73) Titulaire: Renault S.A.S., 92100 Boulogne-Billancourt (FR)
(72) Inventeur: AMBROISE, Stéphanie, 78140 Velizy-Villacoublay (FR)
(86) Numéro de dépôt international: PCT/FR2017/052434
(87) Numéro de publication internationale: WO 2018/051012

(56) Documents cités:
- EP-A1- 2 528 330
- WO-A2-2015/063422
- FR-A1- 2 979 299

## Description

La présente invention concerne de manière générale le domaine automobile.

Elle concerne plus particulièrement le domaine des méthodes d'aide à la conduite pour conducteur de véhicule automobile.

Elle concerne également un procédé d'implémentation dans un véhicule automobile de cette méthode.

Elle concerne enfin un dispositif d'aide à la conduite pour un conducteur d'un véhicule automobile.

### ARRIERE-PLAN TECHNOLOGIQUE

On connaît une méthode d'aide à la conduite selon laquelle il est possible de détecter un obstacle à proximité d'un véhicule, et d'indiquer au conducteur la zone approximative de sa localisation dans l'environnement du véhicule.

Selon cette méthode, l'environnement entourant le véhicule est représenté schématiquement sur un écran du véhicule par une pluralité de zones entourant ce véhicule. Lorsqu'aucun obstacle n'est détecté, les zones sont toutes éteintes ou grisées. Dès qu'un obstacle est détecté dans une zone, la méthode prévient le conducteur de la présence de cet obstacle en faisant ressortir cette zone par rapport aux autres zones, par exemple en allumant ou colorant cette zone.

Cette méthode indique de plus au conducteur la distance approximative de l'obstacle par rapport au véhicule. Par exemple, si l'obstacle est relativement éloigné du véhicule, la zone est colorée en vert, et au fur et à mesure que le véhicule s'approche de l'obstacle, la zone se colore en orange puis en rouge.

Un exemple de cette méthode est illustré dans la demande de brevet FR2979299 qui décrit une méthode d'aide à la conduite pour un conducteur d'un véhicule, permettant d'afficher une représentation de la trajectoire du véhicule et un indicateur représentatif du niveau de risque d'intersection de la trajectoire par un obstacle.

Cependant, avec cette méthode, le conducteur ne sait pas s'il va véritablement entrer en contact avec l'obstacle. Notamment, le conducteur doit lui-même déduire, par exemple en fonction de l'évolution des couleurs des zones, s'il s'éloigne ou s'approche de l'obstacle.

On connait aussi la demande de brevet EP2528330 qui décrit une méthode selon laquelle on affiche une représentation de la trajectoire du véhicule ainsi que de l'ensemble de l'environnement du véhicule dans un angle de vue donné, et un indicateur informant de la distance obstacle-véhicule lorsque l'obstacle est situé dans la trajectoire.

Cependant, avec cette méthode, le conducteur est confronté à une représentation complexe et ne lui permettant pas de savoir, sans analyse par le conducteur de la représentation complète, s'il s'éloigne ou se rapproche de l'obstacle tant que celui-ci est sur la trajectoire.

### OBJET DE L'INVENTION

Afin de remédier à l'inconvénient précité de l'état de la technique, la présente invention propose une méthode d'aide à la conduite plus précise permettant d'indiquer au conducteur s'il risque d'entrer en contact avec l'obstacle détecté ou si cet obstacle est simplement présent dans l'environnement du véhicule sans danger de percussion.

Plus particulièrement, on propose selon l'invention et selon la revendication 1 une méthode d'aide à la conduite pour un conducteur d'un véhicule automobile, comprenant les étapes suivantes :
a) détermination de la position angulaire du volant dudit véhicule automobile (P1) ;
b) capture d'au moins une image d'un environnement du véhicule et, détection de la présence d'un obstacle à proximité du véhicule automobile (Q1) ;
c) détermination d'une trajectoire du véhicule automobile au moins à partir de la position angulaire du volant (P2), détermination d'une grandeur relative à la position de l'obstacle détecté à l'étape b), et détermination d'une distance entre ledit obstacle détecté et ledit véhicule (Q2), et identification d'une zone de l'environnement du véhicule dans laquelle est localisé ledit obstacle ;
d) affichage d'une représentation graphique dudit environnement du véhicule déterminée à partir de ladite image capturée, ladite représentation étant divisée en plusieurs parties (10 ; 20) de forme géométrique entourant ledit véhicule et affichage simultané sur un écran (1 ; 2) du véhicule automobile d'une enveloppe (50) représentative de la trajectoire dudit véhicule et d'un indicateur représentatif de la position relative de l'obstacle détecté à l'étape b) par rapport au véhicule automobile (R2), ledit indicateur comprenant un deuxième signal visuel émis lorsque la distance entre le véhicule et ledit obstacle est inférieure à une valeur seuil et que l'obstacle détecté appartient en outre à la trajectoire du véhicule.

Grâce à la méthode selon l'invention, le conducteur peut visualiser la trajectoire du véhicule, ce qui lui permet de voir s'il risque ou non de percuter l'obstacle détecté.

En outre, grâce à la méthode selon l'invention, la conduite est facilitée car le conducteur visualise l'impact d'un changement d'orientation des roues sur la trajectoire, et par conséquent sur l'évitement ou non de l'obstacle. Notamment, grâce à cette nouvelle méthode, le conducteur voit si le changement d'orientation des roues suffit à éviter l'obstacle ou si une manœuvre s'avère nécessaire.

D'autres caractéristiques non limitatives et avantageuses de la méthode conforme à l'invention sont les suivantes :
- à l'étape d), il est prévu que ledit indicateur soit en outre représentatif de la position relative de l'obstacle détecté à l'étape b) par rapport à ladite trajectoire du véhicule déterminée à l'étape c) ;
- à l'étape c), il est en outre prévu de déterminer la position dans l'écran dudit indicateur en fonction de de la grandeur relative à la position de l'obstacle par rapport au véhicule ;
- à l'étape c), on détermine une distance entre ledit obstacle détecté et ledit véhicule ;
- à l'étape d), ledit indicateur comprend un premier signal visuel émis lorsque la distance entre le véhicule et ledit obstacle est inférieure à une valeur seuil ;
- à l'étape d), ledit indicateur comprend un deuxième signal visuel émis lorsque la distance entre le véhicule et ledit obstacle est inférieure à une valeur seuil et que l'obstacle détecté appartient en outre à la trajectoire du véhicule ;
- à l'étape d), on affiche une représentation graphique d'un environnement du véhicule divisée en plusieurs parties de forme géométrique et ledit premier signal visuel correspond à l'illumination d'au moins l'une de ces parties, chaque partie illuminée étant sélectionnée en fonction de la position de l'obstacle par rapport à cette partie ;
- à l'étape d), ledit deuxième signal visuel correspond à un mode d'illumination particulier de ladite partie choisi en fonction de la position de ladite partie illuminée par rapport à la trajectoire du véhicule ;
- à l'étape b), on capture au moins une image d'un environnement du véhicule, et, à l'étape d), on affiche une représentation graphique de cet environnement déterminée à partir de ladite image capturée ;
- à l'étape b), on capture au moins une image dudit obstacle, et, à l'étape d), ledit premier signal visuel correspond à une représentation graphique de l'obstacle détecté à l'étape b), ladite représentation graphique étant déterminée à partir de ladite image capturée ;
- à l'étape d), on affiche une représentation graphique d'un environnement du véhicule divisée en plusieurs parties de forme géométrique et ledit deuxième signal visuel correspond à l'illumination d'au moins une de ces parties, ladite partie illuminée étant sélectionnée en fonction de la position de l'obstacle par rapport à cette partie ;
- à l'étape d), l'indicateur comprend une information relative à la distance entre ledit obstacle détecté et ledit véhicule.

L'invention propose également un procédé d'implémentation dans un véhicule automobile de la méthode d'aide à la conduite selon l'invention, comprenant les étapes suivantes :
- paramétrer au moins une dimension caractéristique du véhicule ;
- paramétrer une limite dans laquelle la détection est réalisée à l'étape b) ;
- paramétrer une pluralité de parties de forme géométrique entourant ledit véhicule.

Grâce au procédé d'implémentation selon l'invention, la méthode d'aide à la conduite peut être facilement installée sur tout type de véhicule.

Ainsi, le procédé d'implémentation selon l'invention associé à la méthode d'aide à la conduite selon l'invention permet une généricité de mise en œuvre de ladite méthode.

L'invention propose enfin un dispositif d'aide à la conduite pour un conducteur d'un véhicule automobile selon la revendication 11, comprenant :
- un capteur angulaire (101) adapté à déterminer la position angulaire du volant dudit véhicule automobile,
- un capteur d'image apte à capturer au moins une image d'un environnement du véhicule,
- un détecteur (102) adapté à détecter la présence d'un obstacle à proximité du véhicule automobile,
- un calculateur (103) adapté à déterminer une trajectoire du véhicule automobile au moins à partir de la position angulaire du volant et à déterminer une grandeur relative à la position de l'obstacle détecté, à déterminer une distance entre ledit obstacle détecté et ledit véhicule et à identifier une zone dudit environnement du véhicule dans laquelle est localisée l'obstacle et;
- un écran d'affichage (1 ; 2) adapté à afficher une représentation graphique dudit environnement du véhicule déterminée à partir de ladite image capturée par le capteur d'image, ladite représentation étant divisée en plusieurs parties de forme géométrique entourant ledit véhicule et afficher simultanément une enveloppe (50) représentative de la trajectoire dudit véhicule, et un indicateur représentatif de la position relative de l'obstacle détecté par rapport à ladite trajectoire et au véhicule automobile, ledit indicateur comprenant un deuxième signal visuel, émis lorsque la distance entre le véhicule et ledit obstacle est inférieure à une valeur seuil et que l'obstacle détecté appartient en outre à la trajectoire du véhicule.

Il est en outre prévu dans ce dispositif au moins un capteur d'image adapté à capturer une image dudit obstacle, et à communiquer avec ledit calculateur de sorte que l'écran affiche une représentation graphique de l'obstacle capturé.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un écran d'affichage d'un premier mode de réalisation d'un dispositif d'aide à la conduite selon l'invention, dont l'affichage est celui obtenu à l'étape d) d'un premier mode de mise en œuvre d'une méthode d'aide à la conduite selon l'invention ;
- la figure 2 représente un écran d'affichage d'un second mode de réalisation d'un dispositif d'aide à la conduite selon l'invention, dont l'affichage est celui obtenu à l'étape d) d'un deuxième mode de mise en œuvre d'une méthode d'aide à la conduite selon l'invention ;
- la figure 3 représente un ordinogramme des étapes principales des premier et deuxième modes de mise en œuvre de la méthode d'aide à la conduite selon l'invention ; et,
- la figure 4 représente schématiquement le premier mode de réalisation du dispositif d'aide à la conduite selon l'invention.

Dans la suite de la description, on considère que « l'environnement du véhicule » correspond à une zone extérieure au véhicule, située à proximité de ce véhicule et tout autour de ce dernier. Par exemple, l'environnement du véhicule correspond à une bande comprise entre 0 et 3 mètres (m) de largeur, ou entre 0 et 2m de largeur, entourant le véhicule, la largeur de la bande étant donnée à partir de la carrosserie du véhicule, selon une direction normale au point de la carrosserie considéré.

On considère que « l'avant du véhicule » est la zone située à l'extérieur du véhicule, entourant le véhicule par l'avant, c'est-à-dire par le capot, et reliant les deux roues avant entre elles.

On considère que « l'arrière du véhicule » est la zone située à l'extérieur du véhicule, entourant le véhicule par l'arrière, c'est-à-dire par le coffre, et reliant les deux roues arrière entre elles.

### Dispositif

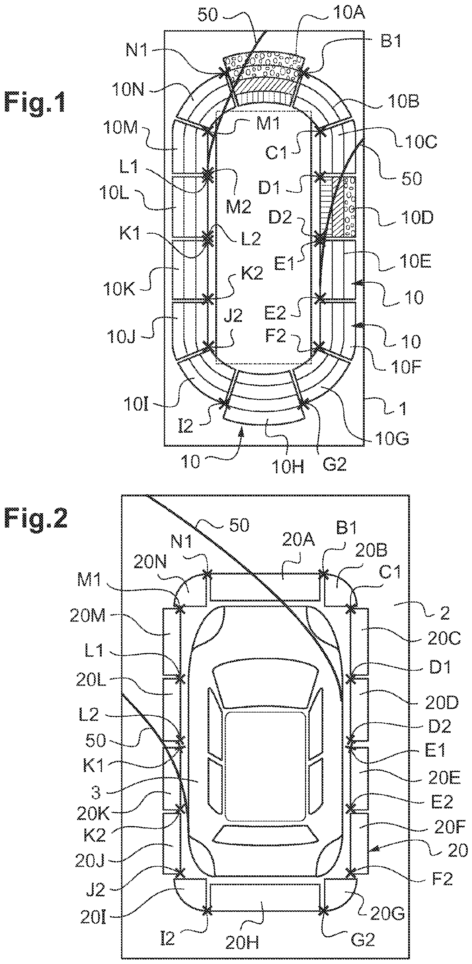

Sur les figures 1 et 2, on a représenté deux écrans d'affichage 1 ; 2 conformément à un premier et à un deuxième mode de réalisation d'un dispositif 100 d'aide à la conduite pour un conducteur d'un véhicule automobile, respectivement.

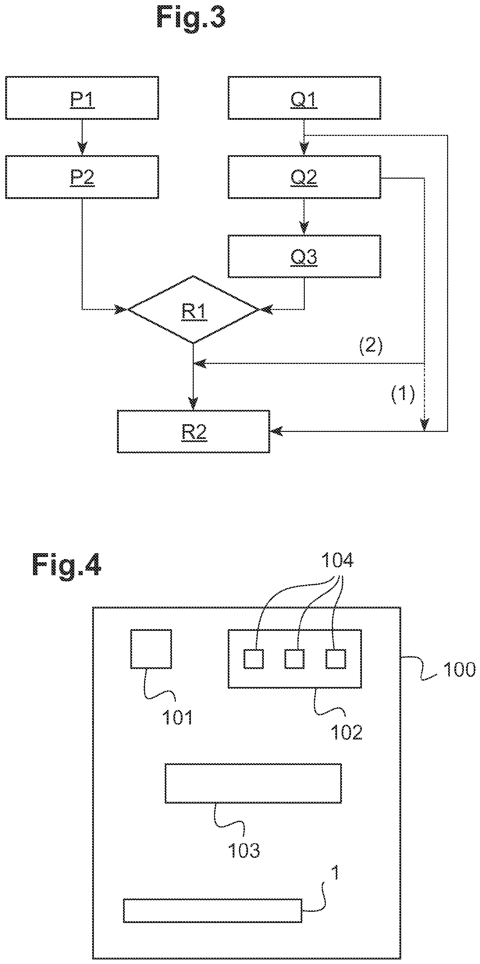

On a représenté sur la figure 4 le premier mode de réalisation du dispositif 100 d'aide à la conduite selon l'invention.

Les premier et deuxième modes de réalisation du dispositif 100 selon l'invention sont respectivement associés à des premier et deuxième modes de mise en œuvre d'une méthode d'aide à la conduite selon l'invention.

En pratique, quel que soit le mode de réalisation envisagé, le dispositif 100 d'aide à la conduite selon l'invention comprend :
- un capteur angulaire 101 adapté à déterminer la position angulaire du volant dudit véhicule automobile,
- un détecteur 102 adapté à détecter la présence d'un obstacle à proximité du véhicule automobile,
- un calculateur 103 adapté à déterminer une trajectoire du véhicule automobile au moins à partir de la position angulaire du volant et à déterminer une grandeur relative à la position de l'obstacle détecté, et
- l'écran d'affichage 1 ; 2 adapté à afficher simultanément une enveloppe 50 représentative de la trajectoire dudit véhicule, et un indicateur représentatif de la position relative de l'obstacle détecté par rapport à ladite trajectoire et au véhicule automobile.

Quel que soit le mode de réalisation envisagé, le capteur angulaire 101 est adapté à déterminer la position angulaire du volant, c'est-à-dire l'angle de rotation du volant mesuré par rapport à une position de référence de ce volant.

La position angulaire du volant est reliée à l'orientation des deux roues avant du véhicule. Elle peut également être reliée à l'orientation des deux roues avant et des deux roues arrière du véhicule dans le cas des véhicules à quatre roues directrices.

La position angulaire, déterminée par le capteur angulaire 101, est donnée en degrés (°).

En pratique, la position de référence du volant correspond à la position du volant dans laquelle les quatre roues du véhicule sont alignées et parallèles. La position angulaire est associée à un angle positif lorsque le volant est tourné vers la droite, et à un angle négatif lorsque le volant est tourné vers la gauche.

Ainsi, la position angulaire est comprise entre -N° et +N°, l'angle nul de 0° correspondant à la position de référence du volant, c'est-à-dire à l'orientation rectiligne des quatre roues du véhicule alignées et parallèles.

Ici N est par exemple supérieur ou égal à 360. La valeur de N correspond au fait qu'il est nécessaire de tourner plusieurs fois le volant pour atteindre la rotation maximale des roues, dans un sens comme dans l'autre. Lorsque le volant atteint le braquage maximal, c'est-à-dire lorsqu'il est en bout de course, la position angulaire est elle-même maximale, en valeur absolue.

Ici, le capteur angulaire 101 est un capteur électronique relié à un axe de support du volant du véhicule.

Quel que soit le mode de réalisation du dispositif 100 de l'invention, le détecteur 102 d'obstacle comprend une pluralité de capteurs à ultrasons 104 répartis autour véhicule.

Les capteurs à ultrasons 104 sont adaptés à envoyer et recevoir des ultrasons pour sonder l'environnement du véhicule et y détecter d'éventuels obstacles.

Pour ce faire, chaque capteur à ultrasons 104 fonctionne à la manière d'un radar, c'est-à-dire qu'il comprend un émetteur adapté à envoyer des ultrasons et un récepteur adapté à recevoir des ultrasons. En pratique, les ultrasons émis sont réfléchis lorsqu'ils rencontrent un obstacle de sorte qu'ils sont susceptibles d'être reçus par le capteur les ayant émis. Chaque capteur à ultrasons 104 est ainsi adapté à détecter la présence d'un obstacle et, en mesurant le temps de vol des ultrasons, à évaluer la distance de cet obstacle.

En pratique, le détecteur 102 comprend ici douze capteurs à ultrasons 104 montés sur le véhicule, seuls trois de ces capteurs à ultrasons 104 étant représentés sur la figure 4. Six de ces capteurs à ultrasons 104 sont disposés à l'avant du véhicule et six autres sont disposés à l'arrière du véhicule.

Les capteurs à ultrasons 104 sont répartis de manière à pouvoir sonder l'environnement avant et l'environnement arrière du véhicule. Notamment chaque capteur à ultrasons 104 est adapté à sonder, à l'avant et à l'arrière du véhicule, une bande comprise entre 0 et Da, à partir de la carrosserie du véhicule, selon chaque direction normale à chaque point de la carrosserie considéré.

En pratique, Da est une distance par exemple égale à 2 mètres ou à 1,2 mètres.

Le détecteur 102 d'obstacle ainsi formé est adapté à communiquer avec le calculateur 103 du dispositif 100.

Avantageusement, grâce aux seuls capteurs à ultrasons 104 avant et arrière, il est possible de déduire la présence ou l'absence d'obstacles sur les flancs droite et gauche du véhicule, sans avoir à disposer des capteurs à ultrasons sur lesdits flancs du véhicule.

Notamment il est possible de déduire la présence ou l'absence d'obstacles dans une bande comprise entre 0 et Db, à partir de la carrosserie du véhicule, selon chaque direction normale à chaque point de la carrosserie considéré.

En pratique, Db est une distance par exemple égale à 1,2 mètres, à 1 mètre ou encore à 60 centimètres.

Cette déduction est réalisée par le calculateur 103 à partir des détections avant et arrière effectuées par les capteurs à ultrasons 104, de la vitesse du véhicule et de la trajectoire dudit véhicule.

Lorsque le véhicule est à l'arrêt, le conducteur peut lui-même sonder sans difficulté son environnement grâce aux rétroviseurs latéraux et au contrôle de ses angles mort latéraux.

Avantageusement, le fait de ne disposer de capteurs à ultrasons 104 qu'à l'avant et à l'arrière permet d'utiliser moins de capteurs à ultrasons tout en garantissant un sondage satisfaisant de l'environnement du véhicule.

Dans le deuxième mode de réalisation du dispositif selon l'invention, ledit dispositif comprend en outre au moins un capteur d'images adapté à capturer au moins une image de l'environnement du véhicule, notamment de l'obstacle détecté par les capteurs à ultrasons.

En pratique, le capteur d'images est par exemple une caméra adaptée à capturer plusieurs images de l'obstacle dans l'environnement du véhicule.

Dans ce deuxième mode de réalisation du dispositif selon l'invention, ledit dispositif comprend par exemple quatre caméras, chacune adaptée à capturer une image de l'environnement du véhicule, notamment de l'obstacle détecté dans cet environnement.

Les quatre caméras sont respectivement disposées sur la carrosserie du véhicule, à l'extrémité avant du véhicule, à l'extrémité arrière du véhicule, et sous chaque rétroviseur latéral du véhicule.

Ces quatre caméras communiquent avec le calculateur du dispositif d'aide à la conduite selon l'invention.

Avantageusement, grâce aux caméras du deuxième mode de réalisation du dispositif selon l'invention et comme expliqué plus loin, il est possible d'afficher sur l'écran d'affichage du dispositif une représentation de l'environnement observé par les caméras, et notamment, le cas échéant, de l'obstacle détecté par les capteurs à ultrasons.

Ainsi, le conducteur a une idée de la nature de l'obstacle détecté, de sa forme, et éventuellement de sa dimension dans un plan parallèle au sol.

Quel que soit le mode de réalisation envisagé du dispositif 100, le calculateur 103 est adapté à recevoir des informations du capteur angulaire 101 du dispositif.

Le calculateur 103 est également adapté à recevoir la vitesse du véhicule, et son sens de marche, à savoir si la marche arrière est en prise ou si une autre vitesse est en prise.

Le calculateur 103 est adapté à déduire l'orientation des deux roues avant du véhicule à partir de la seule position angulaire du volant.

Lorsque le véhicule est muni de quatre roues directrices, le calculateur est à adapté à déduire l'orientation des quatre roues du véhicule à partir de la position angulaire du volant et de la vitesse de déplacement du véhicule.

Le calculateur 103 est en outre adapté à déterminer la trajectoire du véhicule à partir de l'orientation des deux roues avant du véhicule, voire des quatre roues du véhicule.

En pratique, on considère que la trajectoire est une prédiction du chemin que parcourront la roue avant du véhicule et la roue arrière diamétralement opposée à cette roue avant.

Si l'angle au volant est négatif, la trajectoire correspond à la prédiction du chemin que parcourront la roue avant droite et la roue arrière gauche, quel que soit le sens de marche du véhicule.

Si l'angle au volant est positif, la trajectoire correspond à la prédiction du chemin que parcourront la roue avant gauche et la roue arrière droite, quel que soit le sens de marche du véhicule.

Ainsi, la trajectoire est la prédiction de l'empreinte la plus large que laisserait sur la route le véhicule en mouvement.

Le calculateur 103 détermine la trajectoire en temps réel, de sorte que la trajectoire est recalculée au fur et à mesure de la rotation du volant.

Par ailleurs, quel que soit le mode de réalisation du dispositif 100 selon l'invention, le calculateur 103 est adapté à recevoir des informations du détecteur 102.

Notamment, le calculateur 103 est adapté à recevoir des informations des différents capteurs à ultrasons 104.

En particulier, le calculateur 103 reçoit le temps écoulé entre l'émission et la réception des ultrasons par chaque capteur à ultrasons 104 ayant détecté un obstacle.

Le calculateur 103 est ainsi adapté, à partir de la trajectoire du véhicule, de la vitesse du véhicule et des temps de parcours des ultrasons, de déduire la position relative de l'obstacle par rapport aux capteurs à ultrasons 104 ayant détecté l'obstacle, et donc par rapport au véhicule.

Selon le deuxième mode de réalisation du dispositif, le calculateur reçoit en outre au moins une image de l'obstacle capturée par le capteur d'images.

Le calculateur est alors adapté à générer une représentation graphique de l'obstacle dans une vue de dessus dite « *bird view* » du véhicule, affichée sur l'écran d'affichage 1 ; 2.

Enfin, quel que soit le mode de réalisation du dispositif 100, le calculateur 103 commande l'affichage de l'écran 1 ; 2.

L'écran d'affichage 1 ; 2 est disposé dans le véhicule de manière à être visible par le conducteur.

En pratique, il sert d'interface entre le conducteur et le calculateur 103 de sorte que le conducteur est alerté, via cet écran 1 ; 2, avant de heurter un obstacle situé sur sa trajectoire.

Ici, l'écran 1 ; 2 comprend par exemple environ 230 pixels en hauteur et 150 pixels en largeur.

Quel que soit le mode de réalisation du dispositif 100, l'écran 1 ; 2 est ici adapté à afficher des informations en couleur, par exemple au moins en vert, orange, rouge et bleu.

Selon une variante plus simple, il est envisageable que l'écran soit adapté à afficher des informations en différents niveaux de blanc, de gris et de noir.

Quel que soit le mode de réalisation du dispositif 100 selon l'invention, l'écran 1 ; 2 est adapté à afficher une représentation graphique de l'environnement du véhicule, ladite représentation étant divisée en plusieurs parties 10 ; 20 de forme géométrique.

Ainsi, tel que représenté sur les figures 1 et 2, les écrans 1 ; 2 respectifs des premier et deuxième modes de réalisation du dispositif sont chacun adaptés à afficher quatorze parties 10 ; 20 jointives les unes aux autres.

La zone située à l'avant du véhicule est représentée par les cinq parties 10M, 10N, 10A, 10B, 10C ; 20M, 20N, 20A, 20B, 20C juxtaposées situées les plus en haut de l'écran 1 ; 2, tel qu'il est représenté sur les figures 1, 2.

La zone située à l'arrière du véhicule est représentée par les cinq parties 10J, 10I, 10H, 10G 10F ; 20J, 20I, 20H, 20G 20F juxtaposées situées les plus en bas de l'écran, tel qu'il est représenté sur la planche de dessin.

Les zones latérales sont représentées par les deux parties 10L, 10K ; 20L, 20K juxtaposées à droite sur les figures 1 et 2 et les deux parties 10D, 10E ; 20D, 20E juxtaposées à gauche sur les figures 1 et 2, lesdites parties 10L, 10K, 10D, 10E ; 20L, 20K, 20D, 20E étant situées dans la zone médiane de l'écran 1 ; 2.

Comme le montre la figure 1, le véhicule n'est pas représenté sur l'écran 1 du premier mode de réalisation du dispositif 100, mais il est virtuellement situé dans la zone centrale entourée des différentes parties 10.

Sur l'écran 1 du premier mode de réalisation du dispositif 100, chacune des parties 10 entourant la zone centrale est subdivisée en au moins trois bandes longitudinales : la bande dite « externe » est la plus éloignée de la zone centrale, la bande dite « interne » est la plus proche de la zone centrale, et la bande dite « intermédiaire » est celle comprise entre les deux bandes interne et externe.

Sur l'écran 1 de ce premier mode de réalisation du dispositif 100, la partie 10A qui représente la zone prolongeant le capot avant du véhicule et la partie 10H qui représente la zone prolongeant le coffre arrière sont chacune subdivisées en 4 bandes longitudinales.

Ces deux parties 10A et 10H spécifiques comprennent deux bandes externes, une bande intermédiaire et une bande interne.

Comme le montre la figure 2, sur l'écran 2 du deuxième mode de réalisation du dispositif, le véhicule 3 est représenté selon une vue de dessus (« *bird view* »). Il est situé dans la zone centrale entourée de l'ensemble des parties 20.

Quel que soit le mode de réalisation envisagé, l'écran d'affichage 1 ; 2 est en outre adapté à afficher une enveloppe 50 représentative de la trajectoire du véhicule calculé par le calculateur 103.

Cette enveloppe 50 comprend en pratique deux traits représentant la prédiction de l'empreinte que feraient sur le sol l'une des roues avant et la roue arrière diamétralement opposée à cette roue avant, en fonction de la position angulaire du volant.

Comme visible sur les figures 1 et 2, sur l'écran d'affichage 1 ; 2, l'enveloppe 50 se superpose aux parties 10 ; 20 représentant l'environnement du véhicule.

Quel que soit le mode de réalisation envisagé, l'écran d'affichage 1 ; 2 est en outre adapté à afficher l'indicateur représentatif de la position relative de l'obstacle détecté par rapport à la trajectoire et au véhicule automobile.

Cet indicateur comprend un premier signal visuel, émis lorsque la distance entre le véhicule et ledit obstacle est inférieure à une valeur seuil.

La distance entre le véhicule et ledit obstacle est considérée comme la distance la plus petite existant entre le véhicule et l'obstacle. Autrement dit, il s'agit de la distance mesurée selon la direction d'une normale à la carrosserie du véhicule passant par l'obstacle.

Avantageusement, l'écran d'affichage 1 ; 2 permet d'avertir visuellement le conducteur de la présence d'un obstacle dans son environnement proche.

Par exemple, l'écran d'affichage 1 ; 2 avertit le conducteur si un obstacle est détecté à une distance inférieure ou égale à D de la carrosserie, mesurée selon une direction normale à la carrosserie et passant par l'obstacle.

D est une distance inférieure ou égale à la distance de détection (ou de déduction) des capteurs à ultra-sons, c'est-à-dire inférieure ou égale à Da (ou à Db). La distance D est par exemple choisie égale 1,2 mètres.

Ceci est particulièrement intéressant lorsque l'obstacle est détecté dans une zone invisible pour le conducteur, par exemple lorsqu'il est situé à l'arrière ou à l'avant du véhicule, très proche du véhicule.

Selon le premier mode de réalisation du dispositif 100 selon l'invention, le premier signal correspond à l'illumination au moins partielle d'au moins une des parties 10, chaque partie 10 illuminée étant sélectionnée en fonction de la position de l'obstacle par rapport à cette partie 10.

En pratique, la partie 10 illuminée est celle représentant la zone de l'environnement dans laquelle est situé physiquement l'obstacle.

Selon le deuxième mode de réalisation du dispositif selon l'invention, le premier signal correspond à une représentation graphique de l'obstacle détecté, ladite représentation graphique étant déterminée à partir de ladite image capturée par le capteur d'images.

Avantageusement, le conducteur a ainsi une meilleure idée de l'obstacle en question, notamment de sa nature, de sa forme et éventuellement de ses dimensions en vue de dessus, c'est-à-dire hors hauteur.

Quel que soit le mode de réalisation envisagé, l'indicateur affiché par l'écran 1 ; 2 comprend en outre un deuxième signal visuel, émis lorsque la distance entre le véhicule et ledit obstacle est inférieure à une valeur seuil et que l'obstacle détecté est placé sur la trajectoire du véhicule.

Le deuxième signal visuel est distinct du premier signal visuel et s'ajoute ici au premier signal visuel.

En pratique, si, compte tenu de sa trajectoire, le véhicule risque de heurter ou percuter l'obstacle détecté, l'écran d'affichage 1 ; 2 du dispositif alerte le conducteur de cette situation.

Selon le premier mode de réalisation du dispositif 100, le deuxième signal visuel correspond à un mode d'illumination particulier de ladite partie 10 illuminée, ledit mode d'illumination étant choisi en fonction de la position de ladite partie 10 illuminée par rapport à la trajectoire du véhicule.

Le mode d'illumination correspond ici à l'illumination de la partie avec une intensité lumineuse particulière.

Par exemple, si, en plus d'être situé à une distance du véhicule inférieure ou égale à D, l'obstacle est situé sur le parcours prévisionnel, c'est-à-dire sur la trajectoire calculée du véhicule, la partie représentant la zone dans laquelle est localisé l'obstacle s'illumine avec une forte intensité.

Au contraire, si l'obstacle est seulement situé à une distance du véhicule inférieure ou égale à D, sans être sur le parcours prévisionnel du véhicule, la partie représentant la zone dans laquelle est localisé l'obstacle s'illumine avec une intensité plus faible.

Selon le deuxième mode de réalisation du dispositif selon l'invention, ledit deuxième signal visuel correspond à l'illumination d'au moins une des parties 20 représentant l'environnement du véhicule, ladite partie 20 illuminée étant sélectionnée en fonction de la position de l'obstacle par rapport à cette partie 20.

En pratique, si, en plus d'être situé à une distance du véhicule inférieure à D, l'obstacle est situé sur le parcours prévisionnel du véhicule, non seulement l'obstacle est représenté graphiquement à l'écran, mais en plus la partie 20 représentant la zone dans laquelle est localisé l'obstacle s'illumine.

Au contraire, si l'obstacle est seulement situé à une distance du véhicule inférieure à D, sans être sur le parcours prévisionnel du véhicule, seule la représentation graphique de l'obstacle est affichée à l'écran, sans que la partie 20 représentant la zone dans laquelle est localisé l'obstacle ne s'illumine.

Selon une variante sophistiquée de l'un quelconque des modes de réalisation du dispositif selon l'invention, il est encore possible que l'indicateur comprenne en outre une information relative à la distance entre l'obstacle détecté et ledit véhicule.

Selon le premier mode de réalisation du dispositif 100, la distance entre l'obstacle et le véhicule est représentée à l'écran 1 par les différentes bandes longitudinales, interne, intermédiaire et externe, découpant chaque partie 10.

Ainsi, lorsque l'obstacle est dans l'environnement proche du véhicule, mais relativement éloigné du véhicule, par exemple à une distance comprise entre D2 et D, seule la bande externe de la partie 10 correspondante s'illumine.

Ici D2 est une distance inférieure à la distance D, par exemple égale à 70 centimètres.

Lorsque l'obstacle est situé dans l'environnement proche du véhicule à une distance intermédiaire du véhicule, par exemple à une distance comprise entre D1 et D2, les bandes externe et intermédiaire de la partie 10 correspondante s'illuminent.

D1 est ici une distance inférieure à D2, par exemple égale à 30 centimètres.

Lorsque l'obstacle est situé dans l'environnement proche du véhicule à une distance faible du véhicule, par exemple à une distance inférieure ou égale à D1, la totalité de la partie 10 correspondante s'illumine, à savoir l'ensemble des bandes externe, intermédiaire et interne de la partie 10 correspondante s'illuminent.

Avantageusement, selon une variante sophistiquée de ce premier mode de réalisation du dispositif selon l'invention, pour faciliter la compréhension du conducteur, chaque bande est illuminée dans une couleur qui lui est propre. Ainsi, les bandes externes sont illuminées en vert, les bandes intermédiaires sont illuminées en orange et les bandes internes sont illuminées en rouge.

Sur la figure 1, la couleur verte est matérialisée par des pois, la couleur orange par des hachures obliques et la couleur rouge par des hachures perpendiculaires à la carrosserie.

Selon le deuxième mode de réalisation du dispositif selon l'invention, la distance entre l'obstacle et le véhicule est représentée à l'écran 2 par une couleur spécifique de la partie 20 illuminée.

Selon ce deuxième mode de réalisation, l'indicateur ne comprend une information relative à la distance que lorsque l'obstacle est situé dans la trajectoire du véhicule.

Ainsi, lorsque l'obstacle est situé dans l'environnement proche du véhicule, dans la trajectoire du véhicule, mais relativement éloigné du véhicule, par exemple à une distance comprise entre D2 et D, la partie 20 correspondante s'illumine en vert, en totalité.

Ici D2 est une distance inférieure à la distance D, par exemple égale à 70 centimètres, comme dans le premier mode de réalisation.

Lorsque l'obstacle est situé dans l'environnement proche du véhicule, dans la trajectoire du véhicule, à une distance intermédiaire du véhicule, par exemple à une distance comprise entre D1 et D2, la partie 20 correspondante s'illumine en orange, en totalité.

D1 est ici une distance inférieure à D2, par exemple égale à 30 centimètres, comme dans le premier mode de réalisation.

Lorsque l'obstacle est situé dans l'environnement proche du véhicule, dans la trajectoire du véhicule, à une distance faible du véhicule, par exemple à une distance inférieure ou égale à D1, la partie 20 correspondante s'illumine en rouge, en totalité.

L'écran d'affichage 1 ; 2 de chaque mode de réalisation du dispositif 100 selon l'invention est par conséquent adapté à afficher des indicateurs différents, obtenus respectivement selon le premier mode de mise en œuvre de la méthode d'aide à la conduite selon l'invention et selon le deuxième mode de mise en œuvre de la méthode selon l'invention.

### Méthode

Sur la figure 3, on a représenté les étapes principales des premier et deuxième modes de mise en œuvre de la méthode d'aide à la conduite selon l'invention.

Quel que soit le mode de mise en œuvre de la méthode d'aide à la conduite selon l'invention, ladite méthode comprend les étapes suivantes :
a) détermination de la position angulaire du volant dudit véhicule automobile, ici mise en œuvre par le capteur de position angulaire ;
b) détection de la présence d'un obstacle à proximité du véhicule automobile, ici mise en œuvre par le détecteur d'obstacle ;
c) détermination d'une trajectoire du véhicule automobile au moins à partir de la position angulaire du volant et détermination d'une grandeur relative à la position de l'obstacle détecté à l'étape b), ici mise en œuvre par le calculateur ;
d) affichage simultané sur l'écran 1 ; 2 du véhicule automobile de l'enveloppe 50 représentative de la trajectoire dudit véhicule et de l'indicateur représentatif de la position relative de l'obstacle détecté à l'étape b) par rapport à ladite trajectoire et au véhicule automobile.

A l'étape a), représentée par la case P1 sur la figure 3, le capteur angulaire 101 détermine la position angulaire du volant et envoie au calculateur 103 l'angle correspondant du volant.

Cette étape est identique pour les deux modes de mise en œuvre de l'invention.

En parallèle, quel que soit le mode de mise en œuvre de la méthode selon l'invention, à l'étape b), représentée par la case Q1 sur la figure 3, les émetteurs des différents capteurs à ultrasons 104 du détecteur 102 envoient des ultrasons pour sonder l'environnement du véhicule.

Lorsque les ultrasons sont reçus par au moins un récepteur des différents capteurs à ultrasons 104, le détecteur 102 considère qu'un obstacle est détecté car c'est lui qui a réfléchi lesdits ultrasons initialement émis.

Selon le deuxième mode de mise en œuvre de l'invention, à l'étape b), les capteurs d'images capturent des images de l'environnement du véhicule.

Ainsi, au moins un capteur d'images capture au moins une image de l'obstacle.

Selon une variante sophistiquée, on peut envisager que seuls le ou les capteurs d'images situés à proximité des capteurs à ultrasons 104 ayant détecté un obstacle capturent une image.

A l'étape c), quel que soit le mode de mise en œuvre de la méthode, le calculateur 103 calcule la trajectoire du véhicule à partir de la position angulaire du volant déterminée à l'étape a). Cette étape est représentée par la case P2 sur la figure 3.

En outre, lorsqu'un obstacle est détecté à l'étape b), le calculateur 103 calcule, à l'étape c), la distance entre ledit obstacle et le récepteur du capteur à ultrasons 104 ayant reçus les ultrasons réfléchis par l'obstacle.

En pratique, le calculateur 103 calcule cette distance en fonction de la vitesse du véhicule, de la trajectoire dudit véhicule estimée précédemment, et du temps de parcours des ultrasons, c'est-à-dire du temps écoulé entre leur émission et leur réception par le capteur.

Le calculateur 103 déduit ensuite, en fonction des dimensions du véhicule, la distance entre ledit obstacle et le véhicule, c'est-à-dire la distance la plus courte existant entre l'obstacle et le véhicule. Cette distance est celle mesurée selon la direction d'une normale à la carrosserie du véhicule passant par l'obstacle.

Cette étape est représentée par la case Q2 de la figure 3.

A l'étape c) toujours, le calculateur 103 identifie la zone de l'environnement du véhicule dans laquelle est localisé ledit obstacle. Cette étape est représentée par la case Q3 sur la figure 3.

A l'étape d) de la méthode selon l'invention, le calculateur 103 commande l'écran 1 ; 2 du véhicule pour qu'il affiche simultanément les différentes informations d'aide à la conduite utiles au conducteur. Cette étape d'affichage est représentée par la case R2 de la figure 3.

En particulier, l'écran 1 ; 2 affiche l'enveloppe 50 représentative de la trajectoire dudit véhicule calculée à l'étape c), et l'indicateur représentatif de la position relative de l'obstacle détecté à l'étape b) par rapport à ladite trajectoire et au véhicule automobile.

Quel que soit le mode de mise en œuvre de l'invention, l'écran 1 ; 2 affiche l'enveloppe 50 représentative de la trajectoire sous forme de deux traits. Ces traits représentent le chemin prédictif que traceront au sol une des roues avant du véhicule et la roue arrière diamétralement opposée à cette roue avant, si la position angulaire du volant déterminée à l'étape a) est maintenue.

Cet affichage de l'enveloppe 50 évolue au fur et à mesure que le conducteur tourne son volant.

Avantageusement, les traits sont tracés de manière à être distingués des autres informations présentes à l'écran. Par exemple, ils sont tracés en couleur, par exemple en bleu.

Selon le deuxième mode de mise en œuvre de la méthode, l'écran 2 affiche en outre une représentation d'une vue de dessus du véhicule.

En outre, dans les parties 20A, 20N, 20B représentant l'environnement du véhicule, on affiche une portion d'image capturée par la caméra située à l'extrémité avant du véhicule, dans un angle solide correspondant à la zone de l'environnement représentée par ces parties 20A, 20N, 20B.

Similairement, dans les parties 20M, 20L représentant l'environnement du véhicule, on affiche une portion d'image capturée par la caméra latérale située sous le rétroviseur gauche du véhicule, dans un angle solide correspondant à la zone de l'environnement représentée par ces parties 20M, 20L.

Il en va de même dans les parties 20H, 20I, 20G de l'écran 2, respectivement dans les parties 20C, 20D, grâce à la caméra située à l'extrémité arrière du véhicule, respectivement à la caméra latérale située sous le rétroviseur droit du véhicule.

Par ailleurs, comme il a été introduit précédemment, quel que soit le mode de mise en œuvre de la méthode selon l'invention, l'indicateur affiché par l'écran 1 ; 2 comprend le premier signal visuel, émis lorsque la distance entre le véhicule et l'obstacle détecté est inférieure à une valeur seuil.

Pour ce faire, à l'étape d), le calculateur 103 compare la distance la plus courte existant entre l'obstacle et le véhicule, telle qu'elle a été calculée à l'étape c), et la valeur seuil.

La valeur seuil est choisie suffisamment petite pour que le conducteur soit alerté si l'obstacle est trop prêt du véhicule et s'il y a risque de percussion, tout en étant suffisamment grande pour laisser une chance au conducteur de réagir et d'éviter l'obstacle.

Ici la valeur seuil est choisie égale à la distance D, par exemple égale à 1,2m. En variante, on pourrait choisir la distance D, et donc la valeur seuil, égales à 1,5m, à 1,4m, à 1,3m, ou à toute autre valeur. Il conviendrait alors d'adapter toutes les distances, notamment les distances D1, D2 données dans cette description.

Lorsque la distance la plus courte entre l'obstacle et le véhicule est supérieure à la valeur seuil choisie, le premier signal visuel n'est pas déclenché (ou émis).

En pratique, cette situation est équivalente à celle selon laquelle aucun obstacle n'est détecté par le dispositif de l'invention.

Selon le premier mode de mise en œuvre de la méthode, l'écran 1 affiche uniquement l'enveloppe 50, et les parties géométriques représentant l'environnement, dans une couleur grisée.

Selon le deuxième mode de mise en œuvre de la méthode, l'écran 2 affiche uniquement l'enveloppe 50 de la trajectoire et la vue de dessus du véhicule.

Lorsque la distance la plus courte entre l'obstacle et le véhicule est inférieure à la valeur seuil choisie, le premier signal visuel est déclenché (ou émis).

En pratique, cette situation est équivalente à celle selon laquelle un obstacle est détecté par le dispositif de l'invention. Dans ce cas, le premier signal visuel est nécessairement émis par l'écran 1 ; 2 d'affichage.

Selon le premier mode de mise en œuvre de la méthode, l'écran 1 indique au conducteur la zone dans laquelle est localisé l'obstacle, telle qu'elle a été identifiée à l'étape c) par le calculateur.

Une telle indication peut par exemple consister à allumer la zone ou à produire un flash lumineux dans la zone. Ici, la zone est illuminée.

Selon le deuxième mode de réalisation, l'écran 2 affiche une représentation graphique de l'obstacle dans la zone identifiée à l'étape c).

La représentation graphique de l'obstacle est déterminée par le calculateur, à partir de l'image de l'obstacle capturée à l'étape b).

Par ailleurs, quel que soit le mode de mise en œuvre de la méthode selon l'invention, l'indicateur affiché par l'écran 1 ; 2 comprend le deuxième signal émis lorsque la distance entre le véhicule et ledit obstacle est inférieure à une valeur seuil et que l'obstacle détecté appartient à la trajectoire du véhicule.

Ainsi, lorsque la distance la plus courte entre l'obstacle et le véhicule est supérieure à la valeur seuil choisie, le deuxième signal visuel n'est bien entendu pas déclenché, le premier signal visuel n'étant lui-même pas déclenché.

Lorsque la distance la plus courte entre l'obstacle et le véhicule est inférieure à la valeur seuil choisie et que l'obstacle appartient à la trajectoire du véhicule, le deuxième signal visuel est déclenché.

En pratique, la méthode selon l'invention détermine si la zone identifiée à l'étape c), dans laquelle est localisé l'obstacle, appartient au moins en partie à la trajectoire du véhicule.

Pour ce faire, le calculateur 103 détermine si la zone dans laquelle est localisé l'obstacle est susceptible d'appartenir à la trajectoire, en fonction du sens de marche du véhicule, et de la position angulaire du volant.

Lorsque le véhicule est en marche avant, et que la position angulaire du volant est caractérisée par un angle négatif, les zones de l'environnement susceptibles d'appartenir à la trajectoire sont représentées par les parties 10A, 10B, 10N, 10M, 10L, 10K ; 20A, 20B, 20N, 20M, 20L, 20K (voir figures 1 et 2).

Lorsque le véhicule est en marche avant, et que la position angulaire du volant est caractérisée par un angle positif, les zones de l'environnement susceptibles d'appartenir à la trajectoire sont représentées par les parties 10A, 10B, 10C, 10D, 10E, 10N ; 20A, 20B, 20C, 20D, 20E, 20N (voir figures 1 et 2).

Lorsque le véhicule est en marche arrière, et que la position angulaire du volant est caractérisée par un angle négatif, les zones de l'environnement susceptibles d'appartenir à la trajectoire sont représentées par les parties 10D, 10E, 10F, 10G, 10H, 10I ; 20D, 20E, 20F, 20G, 20H, 20I (voir figures 1 et 2).

Lorsque le véhicule est en marche arrière, et que la position angulaire du volant est caractérisée par un angle positif, les zones de l'environnement susceptibles d'appartenir à la trajectoire sont représentées par les parties 10L, 10K, 10J, 10I, 10H, 10G ; 20L, 20K, 20J, 20I, 20H, 20G (voir figures 1 et 2).

Lorsque le calculateur 103 a identifié la zone dans laquelle est localisée l'obstacle comme non susceptible d'appartenir à la trajectoire, le deuxième signal visuel n'est pas déclenché.

Lorsque le calculateur 103 a identifié la zone dans laquelle est localisée l'obstacle comme susceptible d'appartenir à la trajectoire, il détermine si cette zone appartient effectivement à la trajectoire.

Si la zone identifiée à l'étape c) est la zone 10A ; 20A et que le véhicule est en marche avant, le deuxième signal visuel est déclenché sur cette zone.

Si la zone identifiée à l'étape c) est la zone 10H ; 20H et que le véhicule est en marche arrière, le deuxième signal visuel sera déclenché sur cette zone

Pour les autres zones identifiées à l'étape c) et susceptibles d'appartenir à la trajectoire, le calculateur 103 compare le rayon de braquage du véhicule avec la distance séparant le centre de braquage du véhicule et un point caractéristique limite de la partie 10 ; 20 représentant la zone en question.

Cette étape est représentée par la case R1 sur la figure 3.

En pratique, le calculateur 103 déduit le rayon de braquage du véhicule à deux roues directrices à partir de l'orientation des roues, elle-même déduite de la position angulaire du volant, et de l'empattement des roues, c'est-à-dire de la distance séparant le centre de rotation d'une roue latérale avant et le centre de rotation de la roue arrière située du même côté que cette roue avant.

A partir du rayon de braquage, le calculateur 103 identifie un point du sol comme étant le centre de braquage, c'est-à-dire le point autour duquel le véhicule décrit un cercle lorsque la position angulaire du volant reste constante.

Le point caractéristique limite de chaque partie 10 ; 20 correspond au point de cette partie 10 ; 20 susceptible d'appartenir à la trajectoire alors que tous les autres points de cette partie 10 ; 20 sont encore hors de la trajectoire.

Ainsi, lorsque le véhicule est en marche avant, les points caractéristiques limites des parties 10N, 10M, 10L et 10K ; 20N, 20M, 20L et 20K et 10B, 10C, 10D et 10E ; 20B, 20C, 20D et 20E sont respectivement les points N1, M1, L1, K1 et B1, C1, D1 et E1.

Lorsque le véhicule est en marche arrière, les points caractéristiques des parties 10D, 10E, 10F, 10G ; 20D, 20E, 20F, 20G et 10L, 10K, 10J, 10I ; 20L, 20K, 20J, 20I sont respectivement les points D2, E2, F2, G2 et L2, K2, J2, I2.

Lorsque la distance séparant le centre de braquage du véhicule et le point caractéristique limite de la partie représentant la zone en question est inférieure au rayon de braquage, la zone n'appartient pas à la trajectoire.

Dans ce cas, le deuxième signal visuel n'est pas déclenché.

Lorsque la distance séparant le point caractéristique limite de la partie représentant la zone en question et le centre de braquage du véhicule est supérieure ou égale au rayon de braquage, la zone appartient à la trajectoire.

Dans ce cas, le deuxième signal visuel est déclenché. Selon le premier mode de mise en œuvre de la méthode, la partie 10 considérée s'illumine selon un mode d'illumination particulier. Selon le deuxième mode de mise en œuvre de la méthode, la partie 20 considérée s'illumine.

Sur l'écran 2 de la figure 2, l'affichage indique qu'aucun obstacle n'a été détecté. Sur l'écran 1 de la figure 1, l'affichage indique que deux obstacles ont été détectés, respectivement dans la zone représentée par la partie 10A et dans la zone représentée par la partie 10D, ces deux zones étant dans la trajectoire du véhicule.

D'autre part, quel que soit le mode de mise en œuvre de la méthode selon l'invention, l'indicateur affiché à l'écran 1 ; 2 comprend ici l'information relative à la distance entre ledit obstacle détecté et ledit véhicule.

Dans le premier mode de mise en œuvre de la méthode, cette informative relative à la distance peut être représentée, quel que soit l'état du deuxième signal visuel (déclenché ou non). Cela est représenté par la flèche (1) en pointillés sur la figure 3.

En revanche, dans le deuxième mode de mise en œuvre de la méthode selon l'invention, l'information relative à la distance n'est affichée à l'écran 2, que lorsque le deuxième signal visuel est déclenché. Cela est représenté par la flèche (2) en trait plein sur la figure 3.

En pratique, quel que soit le mode de mise en œuvre de la méthode, à l'étape d), le calculateur 103 compare la distance entre le véhicule et l'obstacle déterminée à l'étape c) et différentes valeurs seuil intermédiaires.

L'environnement du véhicule est découpé en trois secteurs de risque : un secteur à faible risque de percussion représenté par une bande située à une distance comprise entre D2 et D du véhicule, un secteur à risque moyen de percussion représenté par une bande située à une distance comprise entre D1 et D2 du véhicule, et un secteur à fort risque de percussion représenté par une bande située à une distance comprise entre 0cm et D1 du véhicule.

Les trois secteurs de risque sont chacun associé à une valeur seuil intermédiaire : une valeur seuil de faible risque choisie égale à la valeur seuil de déclenchement du premier signal visuel de la méthode selon l'invention, ici égale à D, une valeur seuil de risque moyen choisie égale à D2, et une valeur seuil à fort risque choisie égale à D1.

Le calculateur 103 compare d'abord la distance entre le véhicule et l'obstacle à la valeur seuil à fort risque.

Lorsque la distance entre le véhicule et l'obstacle est inférieure à la valeur seuil à fort risque, le risque de heurter l'obstacle est grand, et l'écran 1 ; 2 en alerte le conducteur.

Selon le premier mode de mise en œuvre de la méthode, la bande interne de la partie 10 concernée s'illumine en rouge, la bande intermédiaire s'illumine en orange et la bande externe s'illumine en vert.

Selon le deuxième mode de mise en œuvre de l'invention, la partie 20 représentant la zone dans laquelle est localisé l'obstacle s'illumine en rouge, en totalité.

Lorsque la distance entre le véhicule et l'obstacle est supérieure à la valeur seuil à fort risque, le calculateur 103 compare la distance entre le véhicule et l'obstacle à la valeur seuil à risque moyen.

Lorsque la distance entre le véhicule et l'obstacle est inférieure à la valeur seuil à risque moyen, le risque de heurter l'obstacle est moyen, et l'écran 1 ; 2 en alerte le conducteur.

Selon le premier mode de mise en œuvre de la méthode, la bande interne de la partie 10 concernée n'est pas illuminée, la bande intermédiaire s'illumine en orange et la bande externe s'illumine en vert.

Selon le deuxième mode de mise en œuvre de l'invention, la partie 20 représentant la zone dans laquelle est localisé l'obstacle s'illumine en orange, en totalité.

Lorsque la distance entre le véhicule et l'obstacle est supérieure à la valeur seuil à risque moyen, le risque de heurter l'obstacle est faible.

Selon le premier mode de mise en œuvre de la méthode, les bandes interne et intermédiaire de la partie 10 concernée ne sont pas illuminées, et la bande externe s'illumine en vert.

Selon le deuxième mode de mise en œuvre de l'invention, la partie 20 représentant la zone dans laquelle est localisé l'obstacle s'illumine en vert, en totalité.

L'écran 1 de la figure 1 indique que les deux obstacles détectés sont dans une zone à faible risque.

On détaillera dans la suite de la description un procédé d'implémentation dans le véhicule automobile de la méthode d'affichage selon l'invention.

Ce procédé d'implémentation comprend les étapes suivantes :
- paramétrer au moins une dimension caractéristique du véhicule ;
- paramétrer une limite dans laquelle la détection est réalisée à l'étape b) ;
- paramétrer la pluralité de parties 10 ; 20 de forme géométrique entourant ledit véhicule.

En pratique, la limite dans laquelle la détection est réalisée correspond à la limite physique de détection des capteurs à ultrasons 104. Cette limite est ramenée à l'échelle de l'écran 1 ; 2 par une homothétie.

La forme géométrique des parties 10 ; 20 représentant l'environnement du véhicule est choisie pour être fidèle aux formes des zones de détection réellement atteintes par les capteurs à ultrasons 104.

Leurs dimensions sont également ramenées à l'échelle pour rentrer dans la taille de l'écran 1 ; 2.

Dans le cas du deuxième mode de mise en œuvre de la méthode, le procédé d'implémentation comprend une étape préliminaire de capture d'une image du véhicule, en vue de dessus.

Dans un mode de mise en œuvre préférentiel, à l'étape d),
on divise l'environnement du véhicule en plusieurs parties 10 de forme géométrique, chacune des parties 10 étant subdivisée en au moins trois bandes longitudinales et
on segmente en portions d'arc l'enveloppe 50 représentative de la trajectoire dudit véhicule à chaque intersection de ladite enveloppe 50 avec lesdites bandes, et
ledit deuxième signal visuel correspond à une coloration déterminée de chaque portion d'arc en fonction de la position de l'obstacle par rapport à ladite bande traversée par ladite portion d'arc.

Ce mode de représentation permet d'alléger la visualisation pour aider le conducteur à distinguer que les éléments critiques de son environnement. En effet, l'enveloppe représentative de la trajectoire du véhicule est segmentée en portions d'arc à chaque intersection avec une bande. Chaque portion d'arc est alors colorée en fonction de la position de l'obstacle par rapport à cette bande. De fait, si on considère les mêmes références de couleur que dans les exemples précédents, la trajectoire demeure tracée en bleu quand elle n'interfère qu'avec une bande externe et la portion d'arc intersectant la bande intermédiaire est coloriée en orange et la portion d'arc intersectant la bande interne de la partie 10 est coloriée en rouge.

La représentation graphique de l'environnement par la seule coloration de l'enveloppe 50 représentative de la trajectoire informe ainsi de manière claire du risque d'obstacle. Comparativement aux autres modes de réalisation, la représentation seule du deuxième signal visuel, qui correspond dans ce mode de réalisation préférentiel à la coloration de la trajectoire en fonction de la proximité avec un obstacle, permet de mieux focaliser l'attention du conducteur sur les risques d'obstacle sur sa trajectoire comparé aux modes de réalisation avec illuminations et modes d'illumination des parties 10.

## Revendications

1. Méthode d'aide à la conduite pour un conducteur d'un véhicule automobile, comprenant les étapes suivantes :
a) détermination de la position angulaire du volant dudit véhicule automobile (P1) ;
b) capture d'au moins une image d'un environnement du véhicule et, détection de la présence d'un obstacle à proximité du véhicule automobile (Q1) ;
c) détermination d'une trajectoire du véhicule automobile au moins à partir de la position angulaire du volant (P2), détermination d'une grandeur relative à la position de l'obstacle détecté à l'étape b), et détermination d'une distance entre ledit obstacle détecté et ledit véhicule (Q2), et identification d'une zone de l'environnement du véhicule dans laquelle est localisé ledit obstacle ;
d) affichage d'une représentation graphique dudit environnement du véhicule déterminée à partir de ladite image capturée, ladite représentation étant divisée en plusieurs parties (10 ; 20) de forme géométrique entourant ledit véhicule et affichage simultané sur un écran (1 ; 2) du véhicule automobile d'une enveloppe (50) représentative de la trajectoire dudit véhicule et d'un indicateur représentatif de la position relative de l'obstacle détecté à l'étape b) par rapport au véhicule automobile (R2),
ledit indicateur comprenant un deuxième signal visuel émis lorsque la distance entre le véhicule et ledit obstacle est inférieure à une valeur seuil et que l'obstacle détecté appartient en outre à la trajectoire du véhicule.

2. Méthode selon la revendication 1, selon laquelle à l'étape c), il est en outre prévu de déterminer la position dans l'écran (1 ; 2) dudit indicateur en fonction de de la grandeur relative à la position de l'obstacle par rapport au véhicule.

3. Méthode selon l'une quelconque des revendications précédentes , selon laquelle, à l'étape d), ledit indicateur comprend un premier signal visuel émis lorsque la distance entre le véhicule et ledit obstacle est inférieure à une valeur seuil.

4. Méthode selon la revendication précédente, selon laquelle, à l'étape d), ledit premier signal visuel correspond à l'illumination d'au moins l'une desdites parties (10) de forme géométrique, chaque partie illuminée étant sélectionnée en fonction de la position de l'obstacle par rapport à cette partie.

5. Méthode selon la revendication précédente, selon laquelle, à l'étape d), ledit deuxième signal visuel correspond à un mode d'illumination particulier de ladite partie (10) choisi en fonction de la position de ladite partie (10) illuminée par rapport à la trajectoire du véhicule.

6. Méthode selon la revendication 1, selon laquelle à l'étape d),
on subdivise chacune des parties (10) de forme géométrique en au moins trois bandes longitudinales et
on segmente en portions d'arc l'enveloppe (50) représentative de la trajectoire dudit véhicule à chaque intersection de ladite enveloppe (50) avec lesdites bandes, et
ledit deuxième signal visuel correspond à une coloration déterminée de chaque portion d'arc en fonction de la position de l'obstacle par rapport à ladite bande traversée par ladite portion d'arc.

7. Méthode selon la revendication 3, selon laquelle, à l'étape b), on capture au moins une image dudit obstacle, et, à l'étape d), ledit premier signal visuel correspond à une représentation graphique de l'obstacle détecté à l'étape b), ladite représentation graphique étant déterminée à partir de ladite image capturée.

8. Méthode selon la revendication précédente, selon laquelle à l'étape d), ledit deuxième signal visuel correspond à l'illumination d'au moins une de ces parties (20) de forme géométrique, ladite partie (20) illuminée étant sélectionnée en fonction de la position de l'obstacle par rapport à cette partie (20).

9. Méthode selon l'une des revendications 3 à 8, selon laquelle à l'étape d), l'indicateur comprend une information relative à la distance entre ledit obstacle détecté et ledit véhicule.

10. Procédé d'implémentation dans un véhicule automobile de la méthode d'aide à la conduite selon l'une des revendications 1 à 9, comprenant les étapes suivantes :
- paramétrer au moins une dimension caractéristique du véhicule ;
- paramétrer une limite dans laquelle la détection est réalisée à l'étape b) ;
- paramétrer une pluralité de parties de forme géométrique entourant ledit véhicule.

11. Dispositif (100) d'aide à la conduite pour un conducteur d'un véhicule automobile, comprenant
- un capteur angulaire (101) adapté à déterminer la position angulaire du volant dudit véhicule automobile,
- un capteur d'image apte à capturer au moins une image d'un environnement du véhicule,
- un détecteur (102) adapté à détecter la présence d'un obstacle à proximité du véhicule automobile,
- un calculateur (103) adapté à déterminer une trajectoire du véhicule automobile au moins à partir de la position angulaire du volant et à déterminer une grandeur relative à la position de l'obstacle détecté, à déterminer une distance entre ledit obstacle détecté et ledit véhicule et à identifier une zone dudit environnement du véhicule dans laquelle est localisée l'obstacle et;
- un écran d'affichage (1 ; 2) adapté à afficher une représentation graphique dudit environnement du véhicule déterminée à partir de ladite image capturée par le capteur d'image, ladite représentation étant divisée en plusieurs parties de forme géométrique entourant ledit véhicule et afficher simultanément une enveloppe (50) représentative de la trajectoire dudit véhicule, et un indicateur représentatif de la position relative de l'obstacle détecté par rapport à ladite trajectoire et au véhicule automobile, ledit indicateur comprenant un deuxième signal visuel, émis lorsque la distance entre le véhicule et ledit obstacle est inférieure à une valeur seuil et que l'obstacle détecté appartient en outre à la trajectoire du véhicule.

12. Dispositif selon la revendication 11, dans lequel il est en outre prévu au moins un capteur d'image adapté à capturer une image dudit obstacle, et à communiquer avec ledit calculateur (103) de sorte que l'écran (2) affiche une représentation graphique de l'obstacle capturé.

## Patentansprüche

1. Fahrassistenz-Methode für einen Fahrer eines Kraftfahrzeugs, die die folgenden Schritte enthält:
a) Bestimmung der Winkelstellung des Lenkrads des Kraftfahrzeugs (P1);
b) Aufnahme mindestens eines Bilds einer Umgebung des Fahrzeugs und Erfassung des Vorhandenseins eines Hindernisses in der Nähe des Kraftfahrzeugs (Q1);
c) Bestimmung einer Fahrspur des Kraftfahrzeugs mindestens ausgehend von der Winkelstellung des Lenkrads (P2), Bestimmung einer Größe bezüglich der Position des im Schritt b) erfassten Hindernisses und Bestimmung eines Abstands zwischen dem erfassten Hindernis und dem Fahrzeug (Q2), und Erkennung einer Zone der Umgebung des Fahrzeugs, in der sich das Hindernis befindet;
d) Anzeige einer ausgehend von dem aufgenommenen Bild bestimmten graphischen Darstellung der Umgebung des Fahrzeugs, wobei die Darstellung in mehrere Teile (10; 20) geometrischer Form unterteilt ist, die das Fahrzeug umgeben, und gleichzeitige Anzeige auf einem Bildschirm (1; 2) des Kraftfahrzeugs einer für die Fahrspur des Fahrzeugs repräsentativen Hüllkurve (50) und eines für die relative Position des im Schritt b) erfassten Hindernisses im Verhältnis zum Kraftfahrzeug (R2) repräsentativen Anzeigers,
wobei der Anzeiger ein zweites visuelles Signal enthält, das gesendet wird, wenn der Abstand zwischen dem Fahrzeug und dem Hindernis geringer als ein Schwellwert ist und wenn das erfasste Hindernis außerdem zur Fahrspur des Fahrzeugs gehört.

2. Methode nach Anspruch 1, wobei im Schritt c) außerdem vorgesehen ist, die Position des Anzeigers im Bildschirm (1; 2) abhängig von der Größe bezüglich der Position des Hindernisses im Verhältnis zum Fahrzeug zu bestimmen.

3. Methode nach einem der vorhergehenden Ansprüche, wobei im Schritt d) der Anzeiger ein erstes visuelles Signal enthält, das gesendet wird, wenn der Abstand zwischen dem Fahrzeug und dem Hindernis geringer ist als ein Schwellwert.

4. Methode nach dem vorhergehenden Anspruch, wobei im Schritt d) das erste visuelle Signal der Beleuchtung mindestens eines der Teile (10) geometrischer Form entspricht, wobei jeder beleuchtete Teil abhängig von der Position des Hindernisses im Verhältnis zu diesem Teil ausgewählt wird.

5. Methode nach dem vorhergehenden Anspruch, wobei im Schritt d) das zweite visuelle Signal einem besonderen Beleuchtungsmodus des Teils (10) entspricht, der abhängig von der Position des beleuchteten Teils (10) im Verhältnis zur Fahrspur des Fahrzeugs gewählt wird.

6. Methode nach Anspruch 1, wobei im Schritt d) jeder der Teile (10) geometrischer Form in mindestens drei Längsstreifen unterteilt wird, und
die für die Fahrspur des Fahrzeugs repräsentative Hüllkurve (59) an jeder Schnittstelle der Hüllkurve mit den Streifen in Bogenabschnitte segmentiert wird, und das zweite visuelle Signal einer bestimmten Färbung jedes Bogenabschnitts abhängig von der Position des Hindernisses im Verhältnis zum vom Bogenabschnitt durchquerten Streifen entspricht.

7. Methode nach Anspruch 3, wobei im Schritt b) mindestens ein Bild des Hindernisses aufgenommen wird, und im Schritt d) das erste visuelle Signal einer graphischen Darstellung des im Schritt b) erfassten Hindernisses entspricht, wobei die graphische Darstellung ausgehend von dem aufgenommenen Bild bestimmt wird.

8. Methode nach dem vorhergehenden Anspruch, wobei im Schritt d) das zweite visuelle Signal der Beleuchtung mindestens eines dieser Teile (20) geometrischer Form entspricht, wobei der beleuchtete Teil (20) abhängig von der Position des Hindernisses im Verhältnis zu diesem Teil (20) ausgewählt wird.

9. Methode nach einem der Ansprüche 3 bis 8, wobei im Schritt d) der Anzeiger eine Information bezüglich des Abstands zwischen dem erfassten Hindernis und dem Fahrzeug enthält.

10. Verfahren zur Implementierung der Fahrassistenz-Methode nach einem der Ansprüche 1 bis 9 in einem Kraftfahrzeug, das die folgenden Schritte enthält:
- Parametrieren mindestens einer charakteristischen Abmessung des Fahrzeugs;
- Parametrieren einer Grenze, innerhalb der die Erfassung im Schritt b) durchgeführt wird;
- Parametrieren einer Vielzahl von Teilen geometrischer Form, die das Fahrzeug umgeben.

11. Fahrassistenzvorrichtung (100) für einen Fahrer eines Kraftfahrzeugs, die enthält:
- einen Winkelsensor (101), der geeignet ist, die Winkelstellung des Lenkrads des Kraftfahrzeugs zu bestimmen,
- einen Bildsensor, der mindestens ein Bild einer Umgebung des Fahrzeugs aufnehmen kann,
- einen Detektor (102), der geeignet ist, das Vorhandensein eines Hindernisses in der Nähe des Kraftfahrzeugs zu erfassen,
- einen Rechner (103), der geeignet ist, eine Fahrspur des Kraftfahrzeugs zumindest ausgehend von der Winkelstellung des Lenkrads zu bestimmen und eine Größe bezüglich der Position des erfassten Hindernisses zu bestimmen, einen Abstand zwischen dem erfassten Hindernis und dem Fahrzeug zu bestimmen und eine Zone der Umgebung des Fahrzeugs zu erkennen, in der sich das Hindernis befindet; und
- einen Anzeigebildschirm (1; 2), der geeignet ist, eine graphische Darstellung der Umgebung des Fahrzeugs anzuzeigen, die ausgehend von dem vom Bildsensor aufgenommenen Bild bestimmt wird, wobei die Darstellung in mehrere Teile geometrischer Form aufgeteilt ist, die das Fahrzeug umgeben, und gleichzeitig eine für die Fahrspur des Fahrzeugs repräsentative Hüllkurve (50) und einen für die relative Position des erfassten Hindernisses im Verhältnis zur Fahrspur und zum Kraftfahrzeug repräsentativen Anzeiger anzuzeigen, wobei der Anzeiger ein zweites visuelles Signal enthält, das gesendet wird, wenn der Abstand zwischen dem Fahrzeug und dem Hindernis geringer ist als ein Schwellwert und das erfasste Hindernis außerdem zum Fahrspur des Fahrzeugs gehört.

12. Vorrichtung nach Anspruch 11, wobei außerdem mindestens ein Bildsensor vorgesehen ist, der geeignet ist, ein Bild des Hindernisses aufzunehmen und mit dem Rechner (103) zu kommunizieren, damit der Bildschirm (2) eine graphische Darstellung des aufgenommenen Hindernisses anzeigt.

## Claims

1. Method for aiding driving for a driver of a motor vehicle, comprising the following steps:
a) determination of the angular position of the steering wheel of said motor vehicle (PI);
b) capture of at least one image of an environment of the vehicle and, detection of the presence of an obstacle in proximity to the motor vehicle (Q1);
c) determination of a trajectory of the motor vehicle at least from the angular position of the steering wheel (P2), determination of a quantity relating to the position of the obstacle detected in the step b), and determination of a distance between said detected obstacle and said vehicle (Q2), and identification of a zone of the environment of the vehicle in which said obstacle is located;
d) display of a graphic representation of said environment of the vehicle determined from said captured image, said representation being divided into several parts (10; 20) of geometrical form surrounding said vehicle and simultaneous display on a screen (1; 2) of the motor vehicle of an envelope (50) representative of the trajectory of said vehicle and of an indicator representative of the relative position of the obstacle detected in the step b) with respect to the motor vehicle (R2),
said indicator comprising a second visual signal emitted when the distance between the vehicle and said obstacle is below a threshold value and the detected obstacle is also on the trajectory of the vehicle.

2. Method according to Claim 1, according to which, in the step c), provision is also made to determine the position in the screen (1; 2) of said indicator as a function of the quantity relating to the position of the obstacle with respect to the vehicle.

3. Method according to either one of the preceding claims, according to which, in the step d), said indicator comprises a first visual signal emitted when the distance between the vehicle and said obstacle is below a threshold value.

4. Method according to the preceding claim, according to which, in the step d), said first visual signal corresponds to the illumination of at least one of said parts (10) of geometrical form, each illuminated part being selected as a function of the position of the obstacle with respect to that part.

5. Method according to the preceding claim, according to which, in the step d), said second visual signal corresponds to a particular mode of illumination of said part (10) chosen as a function of the position of said illuminated part (10) with respect to the trajectory of the vehicle.

6. Method according to Claim 1, according to which, in the step d),
each of the parts (10) of geometrical form is subdivided into at least three longitudinal bands and
the envelope (50) representative of the trajectory of said vehicle is segmented into portions of arc at each intersection of said envelope (50) with said bands, and
said second visual signal corresponds to a determined colouring of each portion of arc as a function of the position of the obstacle with respect to said band crossed by said portion of arc.

7. Method according to Claim 3, according to which, in the step b), at least one image of said obstacle is captured and, in the step d), said first visual signal corresponds to a graphic representation of the obstacle detected in the step b), said graphic representation being determined from said captured image.

8. Method according to the preceding claim, according to which, in the step d), said second visual signal corresponds to the illumination of at least one of these parts (20) of geometrical form, said illuminated part (20) being selected as a function of the position of the obstacle with respect to that part (20).

9. Method according to one of Claims 3 to 8, according to which, in the step d), the indicator comprises information relating to the distance between said detected obstacle and said vehicle.

10. Method for implementation, in a motor vehicle, of the method for aiding driving according to one of Claims 1 to 9, comprising the following steps:
- parameterizing at least one characteristic dimension of the vehicle;
- parameterizing a limit within which the detection is performed in the step b);
- parameterizing a plurality of parts of geometrical form surrounding said vehicle.

11. Device (100) for aiding driving for a driver of a motor vehicle, comprising
- an angular sensor (101) suitable for determining the angular position of the steering wheel of said motor vehicle,
- an image sensor capable of capturing at least one image of an environment of the vehicle,
- a detector (102) suitable for detecting the presence of an obstacle in proximity to the motor vehicle,
- a computer (103) suitable for determining a trajectory of the motor vehicle at least from the angular position of the steering wheel and for determining a quantity relating to the position of the detected obstacle, for determining a distance between said detected obstacle and said vehicle and for identifying a zone of said environment of the vehicle in which the obstacle is located, and;
- a display screen (1; 2) suitable for displaying a graphic representation of said environment of the vehicle determined from said image captured by the image sensor, said representation being divided into several parts of geometrical form surrounding said vehicle and simultaneously displaying an envelope (50) representative of the trajectory of the said vehicle, and an indicator representative of the relative position of the detected obstacle with respect to said trajectory and to the motor vehicle, said indicator comprising a second visual signal, emitted when the distance between the vehicle and said obstacle is below a threshold value and the detected obstacle is also on the trajectory of the vehicle.

12. Device according to Claim 11, wherein there is also provided at least one image sensor suitable for capturing an image of said obstacle, and for communicating with said computer (103) such that the screen (2) displays a graphic representation of the captured obstacle.
